# EUROPÄISCHE PATENTSCHRIFT

(11) **EP 1 434 488 B1**
(45) Veröffentlichungstag und Bekanntmachung des Hinweises auf die Patenterteilung: **25.05.2005**
(21) Anmeldenummer: 02779135.9
(22) Anmeldetag: 02.10.2002
(51) Int. Cl.: A21C 15/04, B26B 13/06

(54) **VORRICHTUNG ZUM SCHNEIDEN VON BACKWERK**
DEVICE FOR CUTTING PASTRY
DISPOSITIF POUR DECOUPER DES ARTICLES DE BOULANGERIE-PATISSERIE

(30) Priorität: 10.10.2001 DE 20116648 U
(43) Veröffentlichungstag der Anmeldung: 07.07.2004
(73) Patentinhaber: Krupka, Loretta, 59519 Möhnesee (DE); Krupka, Jürgen, 59519 Möhnesee (DE); Kock, Thomas, 76189 Karlsruhe (DE)
(72) Erfinder: Krupka, Loretta, 59519 Möhnesee (DE); Krupka, Jürgen, 59519 Möhnesee (DE)
(74) Vertreter: COHAUSZ DAWIDOWICZ HANNIG & PARTNER
(86) Internationale Anmeldenummer: PCT/DE2002/003735
(87) Internationale Veröffentlichungsnummer: WO 2003/032737

(56) Entgegenhaltungen:
- AT-B- 395 837
- CH-A- 257 679
- DE-A- 19 650 322
- DE-U- 20 001 164
- FR-A- 2 532 537
- US-A- 2 800 714
- US-A- 5 469 622

## Beschreibung

Die Erfindung betrifft eine Vorrichtung zum Schneiden von Backwerk mit den Merkmalen des Oberbegriffs des Anspruchs 1 (siehe US-A-2 800 714).

Pizzen, Blechkuchen und anderes flaches Backwerk werden nach dem Backen üblicherweise in serviergerechte Stücke geschnitten. Das Zerteilen des Backwerks erfolgt in der Regel mit einem Messer, wobei nicht immer befriedigende Ergebnisse erzielt werden. Insbesondere bei einem harten Teig und einem rutschigen Belag verschiebt sich der Belag beim Schneiden gegenüber dem Teig. Wenn der Rand des Backwerks relativ hart ist, wie bei Pizzen, ist regelrechte Sägearbeit erforderlich, bei der sich der Belag der Pizzen regelmäßig verschiebt. Auch beim Schneiden von knusprigeren Belägen, beispielsweise solche mit Salamischeiben, kommt es zu Problemen, da der Belag durch die Hin- und Herbewegung des Schneidwerkzeugs einerseits und durch den Druck von oben andererseits in den Teig gedrückt wird, was zu unschönen Schnittkanten führt.

Eine Alternative stellen Schneidroller dar, bei denen eine scharfkantige runde Scheibe durch das Backwerk gerollt wird. Auch hierbei kann sich der Belag des Backwerks vor dem Schneidroller verrutschen. Zudem bleibt das Schneiden mit einem Schneidroller ebenso wie das Schneiden mit einem Messer nicht ohne Spuren am Untergrund. Backbleche können hierdurch ruiniert werden.

Die DE 196 50 322 C2 schlägt ein Schneidbesteck für Backwerke und dergleichen vor, das als Handschere gestaltet ist, mit zwei um einen Drehpunkt gelagerten Schenkeln mit Handgriffen an den Griffenden, einer Unterschneide und einer Oberschneide an der Schneidseite und mit einer stumpfwinkligen Schenkelkröpfung zwischen dem jeweiligen Handgriff und der Schneide. Dieses Schneidbesteck zeichnet sich dadurch aus, dass der Drehpunkt im oberen Bereich der Schenkelkröpfungen wesentlich oberhalb der Schneiden angeordnet ist. Problematisch bei diesem wie eine übliche Schere konfigurierten Schneidbesteck ist, dass der Kraftaufwand beim Schneiden von hartem Backwerk erheblich ist. Dadurch dass der Drehpunkt wesentlich oberhalb der Schneiden und damit entfernt von den Schneiden angeordnet ist, ergibt sich ein ungünstiges Hebelverhältnis. Je weiter der Drehpunkt vom Schneidbereich entfernt ist, desto größer ist die aufzubringende Betätigungskraft. Andererseits hätte ein Drehpunkt in der Nähe der Schneiden zur Folge, dass der Öffnungswinkel des Schneidbestecks relativ gering ist.

Der Erfindung liegt die Aufgabe zugrunde, eine Vorrichtung zum Schneiden von Backwerk mit über einen Drehpunkt miteinander verbundenen Schenkeln bereitzustellen, bei welchen sowohl große Öffnungswinkel der Schenkel realisierbar sind und das Backwerk mit geringem Kraftaufwand geschnitten werden kann.

Die Erfindung löst diese Aufgabe durch die Merkmale des Schutzanspruchs 1.

Die miteinander verbundenen Schenkel weisen einen Schneidbereich auf mit einer Oberschneide an dem oberen Schenkel und einer Gegenschneide an dem unteren Schenkel. Die Vorrichtung kann über einen Handgriff betätigt werden, der zwischen dem Drehpunkt und dem Schneidbereich angeordnet ist. Um einen Kontakt mit dem Backwerk beim Schneiden zu vermeiden, sind die Schenkel im Übergangsbereich zwischen dem Schneidbereich und dem Handgriff gekröpft. Dadurch ist der Handgriff gegenüber dem Backwerk erhöht angeordnet.

Wesentlich bei der Erfindung ist die Anordnung des Drehpunkts. Dadurch, dass der Drehpunkt relativ weit vom Schneidbereich entfernt ist, ergeben sich bei geringem Öffnungswinkel dennoch hinreichende Beabstandungen zwischen der Oberschneide und der Gegenschneide, um auch dickeres Backwerk zerschneiden zu können.

Der obere Schenkel und der untere Schenkel sind im Bereich des Drehpunktes verbreitert ausgeführt. Diese Verbreiterung senkrecht zur Drehachse der Schenkel bewirkt eine gegenseitige Führung der Schenkel. Insbesondere soll die Verbreiterung auch auf der dem Schneidbereich abgewandten Seite des Drehpunkts gegeben sein, um die Oberschneide eng an der Gegenschneide entlangzuführen zu können.

Vorteilhaft ist der obere Schenkel im Schneidbereich auf seiner oberen Kante mit einer Griffplatte versehen (Anspruch 2). Diese als besonders vorteilhaft erachtete Ausgestaltung ermöglicht eine optimale Kraftübertragung auf die Oberschneide. Im Unterschied zur bekannten Scherenform kann mit dieser Vorrichtung Schneidkraft unmittelbar auf die Oberschneide aufgebracht werden. Dies kann vor allen Dingen unter teilweisem Einsatz des Körpergewichts erfolgen, indem sich eine Person auf die Griffplatte stützt. Dadurch ist es möglich, dass auch zierliche Personen ohne großen Kraftaufwand hartes Backwerk einfach zerteilen können, ohne dabei "Sägearbeit" verrichten und gleichsam befürchten zu müssen, dadurch den Belag des Backwerks zu ruinieren. Die Griffplatte kann entweder einstückig an der Oberkante der Oberschneide ausgebildet sein oder als separates Bauteil an dieser befestigt sein.

Wichtig ist, dass die Griffplatte eine gewisse Mindestbreite aufweist, um eine hinreichende Druckkraft aufbringen zu können, ohne dass es bei häufiger Betätigung in der Hand schmerzt. Dazu kann die Griffplatte gegenüber dem sonstigen Bereich des oberen Schenkels verbreitert sein. Auch eine ergonomische Polsterung beispielsweise in Form eines Gummibelags, ist vorstellbar. Bei dieser Konfiguration mit einer Griffplatte und einem Handgriff dient der Handgriff lediglich der Führung der Vorrichtung, während die eigentliche Schneidarbeit durch den Druck auf die Griffplatte ausgeführt wird. Durch diese funktionale Trennung bei gleichzeitig großem Öffnungswinkel der Schenkel ergibt sich eine besonders gute Handhabbarkeit dieser Vorrichtung.

Nach Anspruch 3 ist vorgesehen, dass der obere Schenkel gegen eine Federkraft in Richtung des unteren Schenkels verlagerbar ist. Insbesondere kann eine Blatt- oder Spiralfeder im Bereich des Drehpunkts angeordnet sein, die die Vorrichtung grundsätzlich in einer Offenstellung hält. Der Benutzer der Vorrichtung ist dadurch nicht gezwungen, nach jedem Niederdrücken der Oberschneide diese wieder anzuheben, sondern kann die Vorrichtung nach jedem Schnitt weiter in das Backwerk führen und braucht für den nächsten Schnitt lediglich die Oberschneide herunterzudrücken.

Aus Sicherheitsgründen ist vorgesehen, dass der obere Schenkel gegen den unteren Schenkel in einer Verschlusstellung verriegelbar ist (Anspruch 4). Einerseits braucht die Vorrichtung dadurch weniger Platz wenn sie nicht benutzt wird und andererseits wird das Verletzungsrisiko erheblich reduziert.

Ein Wellenschliff an wenigstens einer Schneide vorzugsweise der Oberschneide macht es möglich, dass das Backwerk beim Schneiden nicht aus der Vorrichtung herausgedrückt wird, sondern in dieser fixiert wird (Anspruch 5). Der Wellenschliff ist dabei vorzugsweise so konfiguriert, dass sich die Oberschneide förmlich in dem Backwerk verkrallt und dieses an einem Herausrutschen aus der Vorrichtung verhindert. Der Belag soll durch dieses Merkmal nicht vor den jeweiligen Schneiden hergeschoben werden, sondern exakt an Ort und Stelle geschnitten werden, um eine saubere Schnittkante zu erzielen. Die Gegenschneide ist vorzugsweise ohne Wellenschliff ausgeführt, damit sie leicht unter das Backwerk geführt werden kann. Optional ist natürlich auch an der Gegenschneide ein Wellenschliff möglich.

Die Gegenschneide ist an ihrer Spitze nach Anspruch 6 lateral verbreitert. Die Spitze der Gegenschneide ist der Bereich, der zuerst unter das Backwerk geführt werden muss. Damit nicht das Backblech, insbesondere ein beschichtetes Backblech, Schaden nimmt, ist vorgesehen, dass die Spitze lateral, d.h. senkrecht zur Ober- und Gegenschneide verbreitert ist. Diese Verbreiterung bewirkt zudem, dass der Teig des Backwerks angehoben werden kann, ohne dass dieser zerreisst. Die Verbreiterung kann auch so weit ausgeführt sein und sich in Richtung des Handgriffs an der Unterkante des unteren Schenkels erstrecken, dass sie gewissermaßen als Heber für das geschnittene Backwerk fungiert. Denkbar ist auch, dass ein solcher Heber als separates Bauteil an die Vorrichtung ansetzbar ist. Die Verbreiterung der Spitze der Gegenschneide kann sowohl einseitig als auch beidseitig vorgesehen sein. Sie kann einstückig mit dem unteren Schenkel ausgebildet sein oder als separates Bauteil auf die Spitze gesteckt sein.

Bezüglich der Konfiguration des oberen und unteren Schenkels im Schneidbereichs ist nach Anspruch 7 vorgesehen, dass der obere Schenkel im Schneidbereich eine größere Höhe als der untere Schenkel besitzt. Die größere Höhe des oberen Schenkels hat zum einen den Vorteil, dass die Griffplatte immer oberhalb des Backwerks liegt und somit eine Person, die diese Vorrichtung benutzt, nicht mit dem Backwerk unmittelbar in Berührung kommt. Um ausreichend Kraft auf das Backwerk ausüben zu können, ist vorgesehen, dass der untere Schenkel an seiner Unterseite flach ausgestaltet ist und auf dem Backblech aufliegt. Von seiner vorderen Spitze soll der untere Schenkel in Richtung des Handgriffs leicht ansteigen, damit das Backwerk im Bereich der Schnittkante von dem Backblech oder dem Untergrund gelöst wird. Das hat den Vorteil, dass bei Verwendung eines separaten Hebers dieser leicht unter das Backwerk geführt werden kann, um das geschnittene Stück zu entnehmen. Beim Schneiden wird der untere Schenkel grundsätzlich parallel zu dem Backblech geführt, wobei in der Praxis das handgriffseitige Ende des Unterschenkels natürlich auch angehoben werden kann. Für diesen Fall ist die Spitze des Unterschenkels vorzugsweise leicht abgerundet, um auch bei dieser Art der Handhabung empfindliche Backbleche bzw. Unterlagen nicht zu beschädigen. Der obere Schenkel größerer Höhe kann zwischen der Griffplatte und der Oberschneide mit dekorativen oder gewichtssparenden Ausnehmungen versehen sein. Eine Öffnung im vorderen oder hinteren Bereich des oberen Schenkels soll zudem ermöglichen, die Vorrichtung an einem Haken oder ähnlichem aufzuhängen.

In Weiterbildung des Erfindungsgedankens sieht Anspruch 8 vor, dass im Bereich des Drehpunktes ein Schneidrad angeordnet ist. Ein solches Schneidrad hat seinen Drehpunkt vorzugsweise im Drehpunkt der miteinander verbundenen Schenkel, wodurch in diesem Bereich nur eine einzige Lagerung erforderlich ist. Das Schneidrad dient als alternatives Schneidmittel für Backwerk, das aufgrund seiner Konsistenz einfacher mit einem Schneidrad zerteilbar ist. Da sich das Schneidrad in unmittelbarer Nähe des Handgriffs befindet, ist es von einer Abdeckung teilweise geschützt angeordnet (Anspruch 9). Diese teilweise Abdeckung verhindert Verletzungen im Handbereich. Auch ist es auch, über die Abdeckung des Schneidrads beispielsweise durch entsprechende Vorsprünge oder Oberflächenstrukturen ausreichend Kraft auf das Schneidrad beim Schneiden auszuüben.

Eine weitere Möglichkeit, die Schneiden eng aneinander entlangzuführen, ist nach Anspruch 10, dass die Schenkel im Bereich des Handgriffs formschlüssig ineinander greifen. Hierzu kann beispielsweise in einem Schenkel eine Nut vorgesehen sein, in die ein Vorsprung des anderen Schenkels eingreift. Durch dieses Merkmal wird gewährleistet, dass die miteinander verbundenen Schenkel immer einen definierten Abstand zueinander haben und die Vorrichtung zu befriedigenden Schnittergebnissen führt.

Mit der erfindungsgemäßen Vorrichtung ist ein sauberes und Kraft sparendes Schneiden von Backwerken möglich, wobei der Belag des Backwerks im wesentlichen senkrecht zum Teig geschnitten wird. Ein Wellenschliff an der Oberschneide verhindert ein Wegrutschen des Belags. Die Vorrichtung kann aus rostfreiem Edelstahl hergestellt sein. Es sind natürlich auch andere Materialien und Materialkombinationen möglich, wie beispielsweise Metalle mit Teflonbeschichtungen oder auch Ausführungen in geeigneten Kunststoffen oder Keramik.

Die Erfindung ist nachfolgend anhand der in den Figuren schematisch dargestellten Ausführungsbeispielen näher erläutert. Es zeigen:
- Figur 1: in der Seitenansicht eine erste Ausführungsform der erfindungsgemäßen Vorrichtung;
- Figur 2: das Detail A aus Figur 1;
- Figur 3: einen Schnitt entlang der Linie III-III in Figur 1;
- Figur 4: einen Schnitt entlang der Linie IV-IV der Figur 2;
- Figur 5: die Spitze der in Figur 1 dargestellten Vorrichtung in der Draufsicht in Blickrichtung des Pfeils P;
- Figur 6: in der Darstellung der Figur 1 eine weitere Ausführungsform der Vorrichtung mit einem Schneidrad.

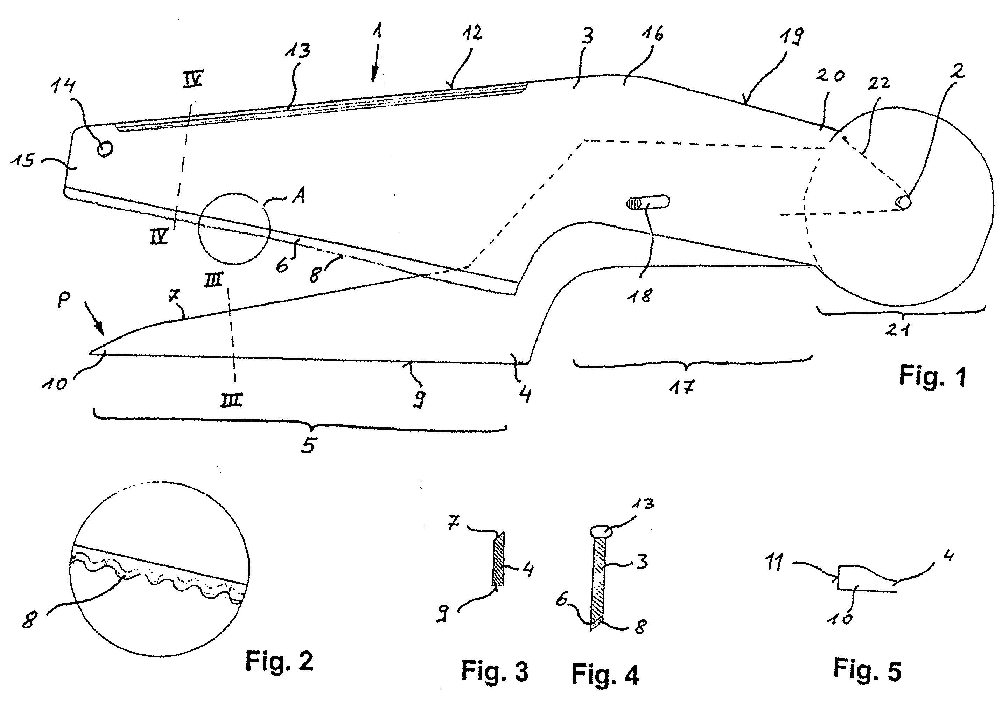

Figur 1 zeigt eine Vorrichtung 1 zum Schneiden von Backwerk. Sie umfasst zwei über einen Drehpunkt miteinander verbundene Schenkel 3, 4. In einem Schneidbereich 5 ist der obere Schenkel 3 mit einer Oberschneide 6 und der untere Schenkel 4 mit einer Gegenschneide 7 versehen. Die Oberschneide 6 besitzt einen Wellenschliff 8, wie aus der Figur 2 zu erkennen ist. Die Oberschneide 6 wirkt mit der Gegenschneide 7 zusammen, wobei die Gegenschneide 7 ohne Wellenschliff ausgeführt ist (Figur 3). Oberschneide 6 und Gegenschneide 7 sind schräg angeschliffen, wie aus den Figuren 3 und 4 zu erkennen ist. Die Oberschneide 6 ist abgesehen vom Wellenschliff 8 in ihrer Längserstreckung gerade, wobei sie in geschlossener Stellung der Vorrichtung 1 parallel zur Unterkante 9 des unteren Schenkels 4 verläuft. Die Unterkante 9 und die Oberschneide 6 haben dabei die gleiche Länge. Während die Oberschneide 6 gerade ist, steigt die Gegenschneide 7 von ihrer Spitze 10 kontinuierlich in Richtung auf den Drehpunkt 2 an.

Figur 5 zeigt die Spitze 10 des unteren Schenkels 4 in der Draufsicht in Richtung des Pfeils P, wobei zu erkennen ist, dass die Spitze 10 zu einer Seite hin verbreitert ist. Die Spitze 10 bildet dadurch eine verbreiterte Vorderkante 11, die sich im weiteren Verlauf des unteren Schenkels 4 wieder verjüngt. Der verbreiterte Bereich befindet sich nur im Bereich der Unterkante 9 des unteren Schenkels und erstreckt sich nicht über seine gesamte Höhe. Er dient lediglich dazu, Backbleche und ähnliches beim Benutzen der Vorrichtung zu schonen und an die Vorrichtung angrenzendes Backwerk anzuheben.

Im Schneidbereich 5 ist der obere Schenkel 3 an seiner Oberkante 12 mit einer Griffplatte 13 versehen, die sich im wesentlichen über die gesamte Länge des Schneidbereichs 5 erstreckt. Die Griffplatte 13 ist gegenüber dem oberen Schenkel 3 verbreitert ausgeführt (Figur 4) und kann beispielsweise aus Kunststoff bestehen. Im vorderen Bereich des oberen Schenkels 3 ist eine Öffnung 14 platziert, um die Vorrichtung 1 an einem Haken oder ähnlichem aufhängen zu können. Die Höhe des oberen Schenkels 3 nimmt im Schneidbereich 5 von dem vorderen Ende 15 bis zum hinteren Ende 16 des Schneidbereichs 5 kontinuierlich zu und ist über den ganzen Schneidbereich 5 höher als die Höhe des unteren Schenkels 4. An das hintere Ende 16 des Schneidbereichs 5 schließt sich ein Handgriff 17 an, der hier in nicht näher dargestellter Weise der Bereich konstanter Höhe des oberen Schenkels 3 zwischen dem hinteren Ende 16 und dem Drehpunkt 2 ist. Auch der untere Schenkel 4 besitzt einen als Handgriff konfigurierten Bereich konstanter Höhe. Im Übergangsbereich zwischen dem Schneidbereich 5 und dem Handgriff 17 ist der untere Schenkel 4 ebenso wie der obere Schenkel 3 gekröpft. Im Bereich des Handgriffs 17 befindet sich eine Verschlussvorrichtung 18, mit der die beiden Schenkel 3, 4 gegeneinander verriegelbar sind. In nicht näher dargestellter Weise kann auch die Oberkante 19 im Bereich des Handgriffs 17 mit einer Griffplatte versehen sein, um ein sicheres Greifen der Vorrichtung 1 zu ermöglichen. Im übrigen kann der ganze Handgriff 17 außenseitig der Schenkel 3, 4 mit ergonomisch gestalteten Griffaufsätzen versehen sein.

An das dem Schneidbereich 5 abgewandte Ende 20 des Handgriffs 17 schließt sich ein Lagerbereich 21 mit einer Feder 22 an. Die Feder 22 befindet sich zwischen dem oberen Schenkel 3 und dem unteren Schenkel 4 und übt eine Federkraft in der Form aus, dass die Vorrichtung 1 in einer Offenstellung gehalten wird. Der Lagerbereich 21 ist kreisscheibenförmig konfiguriert und dient zur Führung des oberen Schenkels 3 und des unteren Schenkels 4 aneinander.

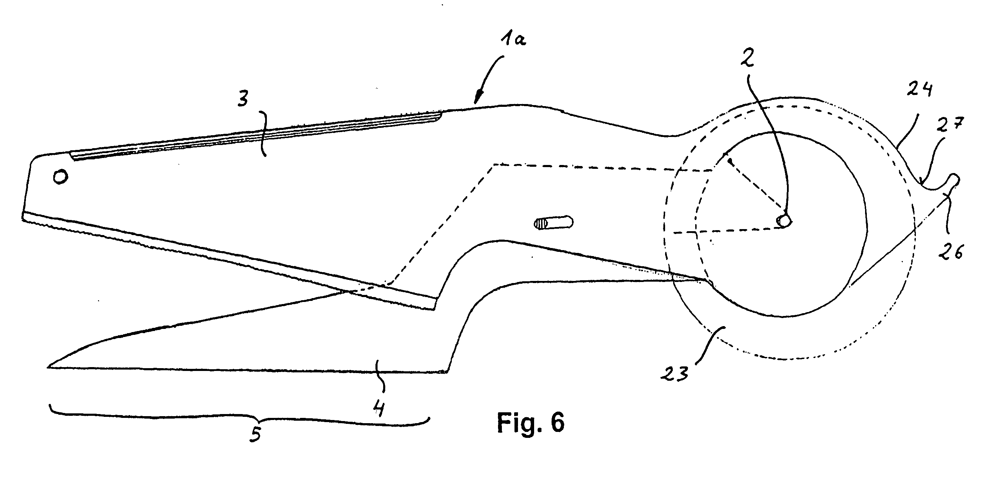

In der Ausgestaltung der Figur 6 werden für gleiche Bauteile die gleichen Bezugszeichen wie in Figur 1 verwendet. Die Ausführungsform der Figur 6 unterscheidet sich von derjenigen der Figur 1 dadurch, dass im Bereich des Drehpunktes 2 ein Schneidrad 23 plaziert ist und im Drehpunkt 2 drehbar gelagert ist. Das Schneidrad 23 ist von einer Abdeckung 24 im oberen Bereich abgedeckt, so dass ein Benutzer der Vorrichtung vor Verletzungen geschützt ist. An dem dem Schneidbereich 5 abgewandten Ende 25 der Vorrichtung 1 ist die Abdeckung 24 mit einer Nase 26 versehen, die eine Griffmulde 27 ausformt. Die Griffmulde 27 dient zur Aufnahme des Daumens, damit beim Benutzen der Vorrichtung 1a hinreichend Druck auf das Werkzeug ausgeübt werden kann.

### Bezugszeichenaufstellung:

- 1 -: Vorrichtung zum Schneiden
- 1a -: Vorrichtung zum Schneiden
- 2 -: Drehpunkt
- 3 -: oberer Schenkel
- 4 -: unterer Schenkel
- 5 -: Schneidbereich
- 6 -: Oberschneide
- 7 -: Gegenschneide
- 8 -: Wellenschliff
- 9 -: Unterkante von 4
- 10 -: Spitze von 7
- 11 -: Vorderkante von 4
- 12 -: Oberkante von 3
- 13 -: Griffplatte
- 14 -: Öffnung
- 15 -: vorderes Ende
- 16 -: hinteres Ende von 5
- 17 -: Handgriff
- 18 -: Verschlussvorrichtung
- 19 -: Oberkante von 17
- 20 -: Ende von 17
- 21 -: Lagerbereich
- 22 -: Feder
- 23 -: Schneidrad
- 24 -: Abdeckung
- 25 -: Ende von 1
- 26 -: Nase an 24
- 27 -: Griffmulde

- P -: Pfeil

## Patentansprüche

1. Vorrichtung zum Schneiden von Backwerk, mit über einen Drehpunkt (2) miteinander verbundenen Schenkeln (3, 4), wobei jeder Schenkel (3, 4) einen Schneidbereich (5) aufweist mit einer Oberschneide (6) an einem oberen Schenkel (3) und einer Gegenschneide (7) an einem unteren Schenkel (4), sowie einen Handgriff (17) zur Führung und Betätigung der Vorrichtung (1, 1 a), wobei die Schenkel (3, 4) zwischen dem Schneidbereich (5) und dem Handgriff (17) gekröpft sind, **dadurch gekennzeichnet, dass** der eine Drehachse aufweisende Drehpunkt (2) auf dem dem Schneidbereich (5) abgewandten Ende (20) des Handgriffs (17) angeordnet ist, und dass der obere Schenkel (3) und der untere Schenkel (4) im Bereich des Drehpunktes (2) senkrecht zur Drehachse der Schenkel (3, 4) verbreitert ausgeführt sind.

2. Vorrichtung nach Anspruch 1, **dadurch gekennzeichnet, dass** der obere Schenkel (3, 4) im Schneidbereich (5) auf seiner Oberkante (12) mit einer Griffplatte (13) versehen ist.

3. Vorrichtung nach Anspruch 1 oder 2, **dadurch gekennzeichnet, dass** der obere Schenkel (3) gegen eine Federkraft in Richtung des unteren Schenkels (4) verlagerbar ist.

4. Vorrichtung nach einem der Ansprüche 1 bis 3, **dadurch gekennzeichnet, dass** der obere Schenkel (3) gegen den unteren Schenkel (4) in einer Verschlussstellung verriegelbar ist.

5. , Vorrichtung nach einem der Ansprüche 1 bis 4, **dadurch gekennzeichnet, dass** wenigstens eine Schneide (6, 7) mit einem Wellenschliff (8) versehen ist.

6. Vorrichtung nach einem der Ansprüche 1 bis 5, **dadurch gekennzeichnet, dass** die Gegenschneide (7) an ihrer Spitze (10) lateral verbreitert ist.

7. Vorrichtung nach einem der Ansprüche 1 bis 6, **dadurch gekennzeichnet, dass** der obere Schenkel (3) im Schneidbereich (5) eine größere Höhe als der untere Schenkel (4) besitzt.

8. Vorrichtung nach einem der Ansprüche 1 bis 7, **dadurch gekennzeichnet, dass** im Bereich des Drehpunktes (2) ein Schneidrad (23) angeordnet ist.

9. Vorrichtung nach Anspruch 8, **dadurch gekennzeichnet, dass** das Schneidrad (23) von einer Abdeckung (24) teilweise geschützt angeordnet ist.

10. Vorrichtung nach einem der Ansprüche 1 bis 9, **dadurch gekennzeichnet, dass** die Schenkel (3, 4) im Bereich des Handgriffs (17) formschlüssig ineinandergreifen.

## Claims

1. Device for cutting pastry with arms (3, 4) connected to each other through a pivot (2), in which each arm (3, 4) has a cutting area (5) with a top cutting edge (6) on a top arm (3) and a counter cutting edge (7) on a bottom arm (4), as well as a hand grip (17) to guide and operate the device (1, 1a), in which the arms (3, 4) are bent at right angles between the cutting area (5) and the hand grip (17), **characterised by** the fact that the pivot (2) with a rotational axis is arranged on the end (20) of the hand grip (17) facing away from the cutting area (5) and that the top arm (3) and the bottom arm (4) are made wider in the area of the pivot (2) vertically to the rotational axis of the arms (3, 4).

2. Device according to claim 1, **characterised by** the fact that the top arm (3, 4) has a holding plate (13) on its top edge (12) in the cutting area (5).

3. Device according to claim 1 or 2, **characterised by** the fact that the top arm (3) can be moved against a spring force in the direction of the bottom arm (4).

4. Device according to one of claims 1 to 3, **characterised by** the fact that the top arm (3) can be locked against the bottom arm (4) in a locking position.

5. Device according to one of claims 1 to 4, **characterised by** the fact that at least one cutting edge (6, 7) has a serrated edge (8).

6. Device according to one of claims 1 to 5, **characterised by** the fact that the counter cutting edge (7) is widened laterally at the top (10).

7. Device according to one of claims 1 to 6, **characterised by** the fact that the top arm (3) is higher than the bottom arm (4) in the cutting area (5).

8. Device according to one of claims 1 to 7, **characterised by** the fact that a cutter (23) is arranged in the area of the pivot (2).

9. Device according to claim 8, **characterised by** the fact that the cutter (23) is arranged partly protected by a cover (24).

10. Device according to one of claims 1 to 9, **characterised by** the fact that the arms (3, 4) interlock with each other in the area of the hand grip (17).

## Revendications

1. Dispositif pour découper des articles de boulangerie et de pâtisserie, comportant des branches (3, 4) reliées l'une à l'autre par l'intermédiaire d'un pivot (2), chaque branche (3, 4) présentant une zone de coupe (5) comportant une lame supérieure (6) sur une branche supérieure (3) et une contre-lame (7) sur une branche inférieure (4), ainsi qu'une poignée (17) pour guider et actionner le dispositif (1, 1a), les branches (3, 4) étant coudées entre la zone de coupe (5) et la poignée (17), **caractérisé en ce que** le pivot (2) présentant un axe de rotation est disposé à l'extrémité (20) de la poignée (17), détournée de la zone de coupe (5), et que la branche supérieure (3) et la branche inférieure (4), dans la zone du pivot (2), sont réalisées de manière élargie perpendiculairement à l'axe de rotation des branches (3, 4).

2. Dispositif selon la revendication 1, **caractérisé en ce que** la branche supérieure (3, 4), dans la zone de coupe (5) est pourvue d'une plaque de préhension (13) sur son arête supérieure (12).

3. Dispositif selon la revendication 1 ou 2, **caractérisé en ce que** la branche supérieure (3) peut être déplacée dans la direction de la branche inférieure (4) en opposition à une force de ressort.

4. Dispositif selon l'une des revendications 1 à 3, **caractérisé en ce que** la branche supérieure (3) peut être verrouillée contre la branche inférieure (4) dans une position de fermeture.

5. Dispositif selon l'une des revendications 1 à 4, **caractérisé en ce qu'**au moins une lame (6, 7) est pourvue d'un crantage (8).

6. Dispositif selon l'une des revendications 1 à 5, **caractérisé en ce qu'**à sa pointe (10), la contre-lame (7) est élargie latéralement.

7. Dispositif selon l'une des revendications 1 à 6, **caractérisé en ce que** la branche supérieure (3) dans la zone de coupe (5) possède une plus grande hauteur que la branche inférieure (4).

8. Dispositif selon l'une des revendications 1 à 7, **caractérisé en ce qu'**une roulette de coupe (23) est disposée dans la zone du pivot (2).

9. Dispositif selon la revendication 8, **caractérisé en ce que** la roulette de coupe (23) est disposée de manière partiellement protégée par une protection (24).

10. Dispositif selon l'une des revendications 1 à 9, **caractérisé en ce que**, dans la zone de la poignée, les branches (3, 4) viennent en prise par correspondance de formes.
